# EUROPEAN PATENT APPLICATION

(11) **EP 4 691 299 A1**
(43) Date of publication of application: **11.02.2026**
(21) Application number: 23930580.8
(22) Date of filing: 30.03.2023
(51) Int. Cl.: A24F 40/50

(54) **POWER SOURCE UNIT FOR AEROSOL GENERATION DEVICE, AND AEROSOL GENERATION DEVICE**

(71) Applicant: Japan Tobacco Inc., Tokyo 105-6927 (JP)
(72) Inventor: YAMADA, Kentaro, Tokyo 130-8603 (JP)
(74) Representative: Hoffmann Eitle
(86) International application number: PCT/JP2023/013353
(87) International publication number: WO 2024/201943

(57) **Abstract**

An aerosol generation device (100) comprises: a power supply unit (111) that supplies power to a heating unit (121); a control unit (116); a substrate (10) on which the control unit (116) is provided; conductive members (20a, 20b) that connect the power supply unit (111) and the substrate (10); and a case (30) that accommodates the abovementioned elements. The conductive members (20a, 20b) comprise: power supply-side contacts (21a, 21b) that contact the power supply unit (111); substrate-side contacts (22a, 22b) that contact the substrate (10); and fixing parts (26a, 26b) that are provided between the power supply-side contacts (21a, 21b) and the substrate-side contacts (22a, 22b), and that are fixed to the substrate (10), the case (30), or another member that is accommodated in the case (30) and is different from the substrate (10) and the case (30).

## Description

### TECHNICAL FIELD

The present disclosure relates to a power source unit for an aerosol generation device, and an aerosol generation device.

### BACKGROUND ART

Aerosol generation devices generally heat an aerosol source by supplying electric power supplied from a power source to a heater, under the of a control portion.

In such an aerosol generation device, a substrate on which the control portion is mounted inside a case is connected to the power source by an electrically conductive member, thereby enabling electric power to be supplied. As the electrically conductive member, a wire in which a copper wire is coated with insulating material, a flexible flat cable (FFC), or a flexible printed circuit (FPC), etc., are used, but from the viewpoint of cost, a metal foil such as aluminum foil or copper foil, or a metal plate including nickel, etc., may still be used.

Since aerosol generation devices are held by the user during use, the device may accidentally be dropped. The impact resulting from such a drop may cause a contact between the electrically conductive member and an electrode or the substrate to peel apart, or may damage the electrically conductive member around the contact point. PTL 1 indicates that a wire is brought into flexible contact between an outer peripheral surface of a control module and an inner peripheral surface of a soft installation base.

### CITATION LIST

### PATENT LITERATURE

PTL 1 JP 2017-503515 A

### SUMMARY OF INVENTION

### TECHNICAL PROBLEM

In aerosol generation devices, regardless of the type or material of the electrically conductive member, it is desirable to effectively prevent the contact between the electrically conductive member and the electrode or substrate from peeling apart, and to prevent damage to the electrically conductive member around the contact point.

The present disclosure provides a power source unit of an aerosol generation device, and an aerosol generation device, which can inhibit peeling apart of the contact between the electrically conductive member and the electrode or substrate, and damage to the electrically conductive member.

### SOLUTION TO PROBLEM

A power source unit for an aerosol generation device according to the present disclosure comprises
a power source for supplying power to a heating portion that heats an aerosol source,
a control portion for controlling the supply of power from the power source to the heating portion,
a substrate on which the control portion is provided,
an electrically conductive member for connecting the power source and the substrate, and a case for accommodating the power source, the control portion, the substrate and the electrically conductive member, wherein
the electrically conductive member comprises:
   a power source-side contact that contacts the power source;
   a substrate-side contact that contacts the substrate; and
   a fixing portion that is provided between the power source-side contact and the substrate-side contact and that is fixed to the substrate, the case, or another member that is accommodated in the case and is different from the substrate and the case.

Further, an aerosol generation device according to the present disclosure comprises
the power source unit for an aerosol generation device, and
the heating portion.

### ADVANTAGEOUS EFFECTS OF INVENTION

According to the present disclosure, since the electrically conductive member is fixed to the substrate, the case, or other member different from the substrate and the case, even if an impact or the like is applied to the aerosol generation device, it is possible to inhibit peeling apart of the contact between the electrically conductive member and the electrode or the substrate and damage to the electrically conductive member.

### BRIEF DESCRIPTION OF DRAWINGS

Fig. 1 is a schematic diagram schematically showing a first configuration example (aerosol generation device 100A) of an aerosol generation device.
Fig. 2 is a schematic diagram schematically showing a second configuration example (aerosol generation device 100B) of an aerosol generation device.
Fig. 3 is a schematic diagram showing a first example of a mode of connection in which a substrate 10 and a power source portion 111 are electrically connected by means of electrically conductive members 20a and 20b.
Fig. 4 is a schematic diagram illustrating electrical wiring on the substrate 10 in the first example of the mode of connection.
Fig. 5 is a schematic diagram showing a second example of a mode of connection in which the substrate 10 and the power source portion 111 are electrically connected by means of the electrically conductive members 20a and 20b.
Fig. 6 is a schematic diagram illustrating electrical wiring on the substrate 10 in the second example of the mode of connection.
Fig. 7 is a schematic diagram showing a third example of a mode of connection in which the substrate 10 and the power source portion 111 are electrically connected by means of the electrically conductive members 20a and 20b.
Fig. 8 is a schematic diagram illustrating electrical wiring on the substrate 10 in the third example of the mode of connection.
Fig. 9 is a schematic diagram showing a fourth example of a mode of connection in which the substrate 10 and the power source portion 111 are electrically connected by means of the electrically conductive members 20a and 20b.
Fig. 10 is a schematic diagram illustrating electrical wiring on the substrate 10 in the fourth example of the mode of connection.
Fig. 11 is a schematic diagram showing a fifth example of a mode of connection in which substrates 10A and 10B and the power source portion 111 are electrically connected by means of the electrically conductive members 20a and 20b.
Fig. 12 is a schematic diagram illustrating electrical wiring on the substrates 10A and 10B in the fifth example of the mode of connection.
Fig. 13 is a schematic diagram showing a sixth example of a mode of connection in which the substrates 10A and 10B and the power source portion 111 are electrically connected by means of the electrically conductive members 20a and 20b.
Fig. 14 is a schematic diagram illustrating electrical wiring on the substrates 10A and 10B in the sixth example of the mode of connection.

### DESCRIPTION OF EMBODIMENTS

Embodiments of the aerosol generation device according to the present disclosure will be described in detail below with reference to the drawings. Two configuration examples (a first configuration example and a second configuration example) to which the configuration of the aerosol generation device according to the present disclosure can be applied will first be described. It should be noted that, hereinafter, identical or similar elements are denoted using identical or similar reference signs, and descriptions thereof may be omitted or simplified as appropriate.

### <<1. Configuration of aerosol generation device>>

An aerosol generation device is a device for generating an aerosol to be inhaled by a user.

### (1) First configuration example

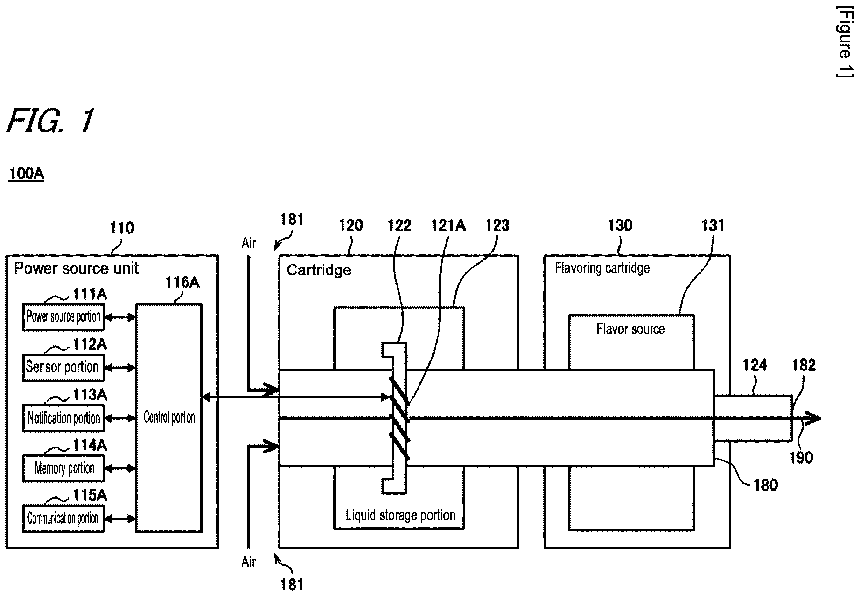

Fig. 1 is a schematic diagram schematically showing a first configuration example of an aerosol generation device. As shown in fig. 1A, an aerosol generation device 100A according to the present configuration example includes a power source unit 110, a cartridge 120, and a flavoring cartridge 130. The power source unit 110 comprises a power source portion 111A, a sensor portion 112A, a notification portion 113A, a memory portion 114A, a communication portion 115A, and a control portion 116A. The cartridge 120 includes a heating portion 121A, a liquid guiding portion 122, and a liquid storage portion 123. The flavoring cartridge 130 includes a flavor source 131 and a mouthpiece 124. An air flow passage 180 is formed in the cartridge 120 and the flavoring cartridge 130.

The power source portion 111A stores electric power. The power source portion 111A then supplies the electric power to each component of the aerosol generation device 100A on the basis of control performed by the control portion 116A. The power source portion 111A may be configured, for example, by a rechargeable battery such as a lithium ion secondary battery.

The sensor portion 112A acquires various types of information relating to the aerosol generation device 100A. As an example, the sensor portion 112A is configured by a pressure sensor such as a condenser microphone, a flow rate sensor or a temperature sensor, etc., and acquires values associated with inhalation by a user. As another example, the sensor portion 112A is configured by an input device, such as a button or switch, for accepting input of information from the user.

The notification portion 113A notifies the user of information. The information notified to the user by the notification portion 113A includes, for example, a state of charge (SOC) indicating the state of charge of the power source portion 111A, a preheating time at the time of inhalation, and an inhalation-possible period, etc. The notification portion 113A is configured by a light emitting device that emits light, a display device that displays images, a sound output device that outputs sound, or a vibrating device that vibrates, for example.

The memory portion 114A stores various types of information for the operation of the aerosol generation device 100A. The memory portion 114A is configured by a non-volatile storage medium such as a flash memory, for example.

The communication portion 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control portion 116A functions as an arithmetic processing device and a control device, and controls overall operation within the aerosol generation device 100A in accordance with various programs. The control portion 116A is realized by a central processing unit (CPU) or an electronic circuit such as a microprocessor, for example.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include tobacco-derived or non-tobacco-derived flavor components. If the aerosol generation device 100 is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating portion 121 heats the aerosol source to atomize the aerosol source, thereby generating the aerosol. The heating portion 121A is formed by any material, such as a metal or polyimide, in any shape, such as coiled, film-like or blade-like. In the example shown in fig. 1, the heating portion 121A is configured as a coil obtained by winding a heat generating resistor such as nichrome or stainless steel, and is wrapped around the liquid guiding portion 122. When the heating portion 121A generates heat, the aerosol source held in the liquid guiding portion 122 is heated and atomized, generating the aerosol. The heating portion 121A generates heat when supplied with electricity from the power source portion 111A.

As an example, the supply of electricity (power supply) to the heating portion 121A may be implemented when the sensor portion 112A detects that the user has started inhaling and/or that predetermined information has been input. The supply of electricity to the heating portion 121A may then be stopped when the sensor portion 112A detects that the user has finished inhaling and/or that predetermined information has been input.

Moreover, the heating portion 121A may be configured to generate an aerosol by means of vibration or induction heating. When the aerosol is generated by means of vibration, the aerosol generation device 100A is provided with a vibrating portion as the heating portion 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the aerosol generation device 100A is provided with a susceptor and an electromagnetic induction source as the heating portion 121A. The susceptor is made of a conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source portion 111A. When the magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 may include tobacco-derived or non-tobacco-derived flavor components. The flavor source 131 may be, for example, a tobacco-derived substance such as shredded tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the aerosol generation device 100A is a medical inhaler, the flavor source 131 may contain a drug to be inhaled by a patient. It should be noted that the aerosol source 131 is not limited to a solid, and may equally be a liquid containing a flavor component, such as a polyhydric alcohol such as glycerol or propylene glycol, or water, for example. Furthermore, the flavor source 131 may be disposed inside a container such as a capsule.

The air flow passage 180 is a flow passage for air to be inhaled by the user. The air flow passage 180 has a tubular structure with an air inflow hole 181, which is an inlet for air into the air flow passage 180, and an air outflow hole 182, which is an outlet for air from the air flow passage 180, at the two ends thereof. Midway along the air flow passage 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating portion 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth to make it possible to draw the mixed fluid of aerosol and air into the oral cavity.

A configuration example of the aerosol generation device 100A was described above. The aerosol generation device 100A is, of course, not limited to the configuration described above, and various configurations, such as those illustrated below by way of example, may be adopted.

As an example, the aerosol generation device 100A need not include the flavoring cartridge 130. In this case, the cartridge 120 is provided with the mouthpiece 124.

As another example, the aerosol generation device 100A may further include a flavor source heating portion (not depicted) for heating the flavor source 131. The flavor source heating portion is configured in a film shape and disposed so as to cover the outer periphery of the flavor source 131, for example. The flavor source heating portion then generates heat when supplied with power from the power source portion 111A, heating the flavor source 131 from the outer periphery thereof. It should be noted that the flavor source heating portion may also be configured in a blade shape, piercing the flavor source 131 to heat the flavor source 131 from the inside, for example. Furthermore, the flavor source heating portion may be configured to heat the flavor source 131 by means of vibration or induction heating. Providing such a flavor source heating portion makes it possible to increase the temperature of the flavor source 131 and to increase the amount of flavor component added to the aerosol, as compared to a case in which the flavor source heating portion is not provided.

Furthermore, as another example, the aerosol generation device 100A may include a plurality of types of aerosol sources. A plurality of types of aerosol generated from the plurality of types of aerosol sources may be mixed within the air flow passage 180 to cause a chemical reaction, thereby generating yet more other types of aerosol.

Furthermore, the means for atomizing the aerosol source is not limited to heating by means of the heating portion 121A. For example, the means for atomizing the aerosol source may be vibration atomization or induction heating.

### (2) Second configuration example

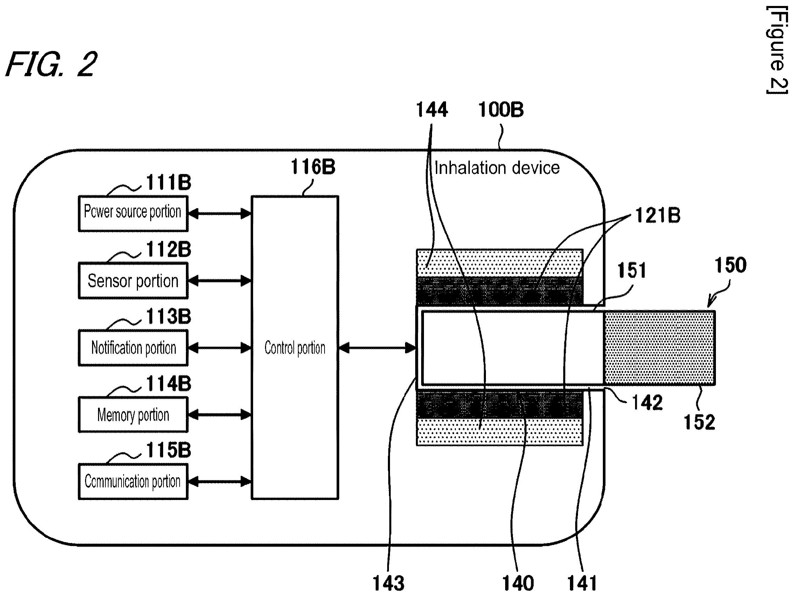

Fig. 2 is a schematic diagram schematically showing a second configuration example of an aerosol generation device. As shown in fig. 2, an aerosol generation device 100B according to the present configuration example comprises a power source portion 111B, a sensor portion 112B, a notification portion 113B, a memory portion 114B, a communication portion 115B, a control portion 116B, a heating portion 121B, an accommodating portion 140, and a heat insulating portion 144. In the aerosol generation device 100A of the first configuration example, the power source unit 110 accommodating the power source portion 111A, and the heating portion 121A were separate elements, but in the aerosol generation device 100B of the second configuration example, the power source portion 111B and the heating portion 121B are integrated. That is, the aerosol generation device 100B of the second configuration example can also be said to have a power source unit with a built-in heating portion.

The power source portion 111B, the sensor portion 112B, the notification portion 113B, the memory portion 114B, the communication portion 115B, and the control portion 116B are each substantially identical to the corresponding component included in the aerosol generation device 100A according to the first configuration example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body including the opening 142 and having a bottom portion 143 serving as a bottom surface, and defines the columnar internal space 141. An air flow passage for supplying air to the internal space 141 is connected to the accommodating portion 140. An air inflow hole, which is an inlet for air into the air flow path, is disposed in a side surface of the aerosol generation device 100, for example. An air outflow hole, which is an outlet for air from the air flow passage to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the aerosol generation device 100 is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is being held in the accommodating portion 140, at least a portion of the substrate portion 151 is accommodated in the internal space 141, and at least a portion of the mouthpiece portion 152 protrudes from the opening 142. Then, when the user holds the mouthpiece portion 152 protruding from the opening 142 in their mouth and inhales, air flows into the internal space 141 via the air flow passage, which is not illustrated in the drawings, and reaches the inside of the user's mouth together with the aerosol generated from the substrate portion 151.

In the example shown in fig. 2, the heating portion 121B is configured as a film heater obtained by laying out a conductive track made of a heat generating resistor having a correlation between electrical resistance and temperature, and is arranged to cover the outer periphery of the accommodating portion 140. Then, when the heating portion 121B generates heat, the substrate portion 151 of the stick-type substrate 150 is heated from the outer periphery, generating the aerosol. It should be noted that a heat generating resistor the same as that of the heating portion 121A described above may be used as the heat generating resistor of the heating portion 121B.

The heat insulating portion 144 prevents heat transfer from the heating portion 121B to other components. For example, the heat insulating portion 144 is configured from a vacuum heat insulating material or an aerogel heat insulating material, or the like.

A configuration example of the aerosol generation device 1 was described above. The aerosol generation device 100B is, of course, not limited to the configuration described above, and various configurations, such as those illustrated below by way of example, may be adopted.

As one example, the heating portion 121B may have a blade-like form and may be disposed so as to protrude into the internal space 141 from the bottom portion 143 of the accommodating portion 140. In this case, the blade-like heating portion 121B is inserted into the substrate portion 151 of the stick-type substrate 150 and heats the substrate portion 151 of the stick-type substrate 150 from the inside. As another example, the heating portion 121B may be disposed so as to cover the bottom portion 143 of the accommodating portion 140. Furthermore, the heating portion 121B may be configured from a combination of two or more from among a first heating portion covering the outer periphery of the accommodating portion 140, a blade-like second heating portion, and a third heating portion covering the bottom portion 143 of the accommodating portion 140.

As another example, the accommodating portion 140 may include an opening and closing mechanism such as a hinge for opening and closing part of an outer shell that forms the internal space 141. Then, by opening and closing the outer shell, the accommodating portion 140 may clamp and accommodate the stick-shaped substrate 150 that has been inserted into the internal space 141. In this case, the heating portion 121B may be provided on the clamping part of the accommodating portion 140, and may heat the stick-type substrate 150 while pressing the same.

Furthermore, the means for atomizing the aerosol source is not limited to heating by the heating portion 121B. For example, the means for atomizing the aerosol source may be induction heating. In this case, the aerosol generation device 100B comprises at least an electromagnetic induction source such as a coil for generating a magnetic field, instead of the heating portion 121B. A susceptor which generates heat by means of induction heating may be provided in the aerosol generation device 100, or may be contained in the stick-type substrate 150.

Furthermore, the aerosol generation device 100B may additionally include the heating portion 121A, the liquid guiding portion 122, the liquid storage portion 123, and the air flow passage 180 according to the first configuration example, and the air flow passage 180 may supply air to the internal space 141. In this case, the mixed fluid of the aerosol generated by the heating portion 121A and air flows into the internal space 141 and is further mixed with the aerosol generated by the heating portion 121B, and reaches the oral cavity of the user.

It should be noted that, hereinafter, the aerosol generation device 100A and the aerosol generation device 100B described above will also be referred to, without distinction, as the "aerosol generation device 100". Similarly, the power source portion 111A and the power source portion 111B may be referred to as the "power source portion 111", the sensor portion 112A and the sensor portion 112B may be referred to as the "sensor portion 112", the notification portion 113A and the notification portion 113B may be referred to as the "notification portion 113", the memory portion 114A and the memory portion 114B may be referred to as the "memory portion 114", the communication portion 115A and the communication portion 115B may be referred to as the "communication portion 115", the control portion 116A and the control portion 116B may be referred to as the "control portion 116", and the heating portion 121A and the heating portion 121B may be referred to as the "heating portion 121".

### <<2. Configuration example of aerosol generation device according to the present disclosure>>

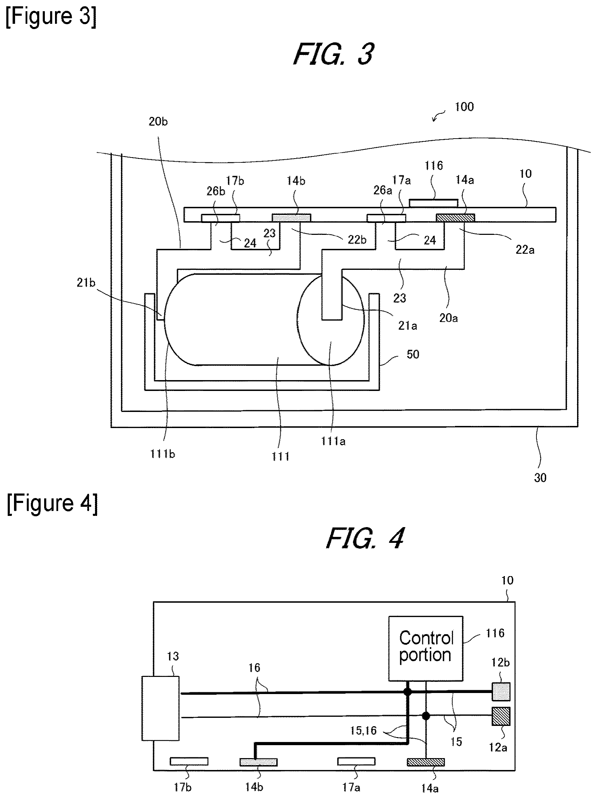

As shown in fig. 3, in the aerosol generation device 100, a substrate 10 on which the control portion 116 is mounted, the power source portion 111, a chassis 50 holding the power source portion 111, and electrically conductive members 20a and 20b connecting the power source portion 111 and the substrate 10 are housed inside a case 30. It should be noted that the sensor portion 112, the notification portion 113, the memory portion 114, the communication portion 115, and the heating portion 121 are omitted.

As shown in fig. 4, the substrate 10 comprises a positive electrode side heating connecting portion 12a and a negative electrode side heating connecting portion 12b (also referred to hereinafter as heating connecting portions 12a, 12b) connected to the heating portion 121, a USB (Universal Serial Bus) port 13, a positive electrode side power source connecting portion 14a and a negative electrode side power source connecting portion 14b (also referred to hereinafter as power source connecting portion 14a, 14b) connected to the power source portion 111, a discharging circuit 15 connecting the heating connecting portions 12a, 12b and the power source connecting portions 14a, 14b, and a charging circuit 16 connecting the USB port 13 and the power source connecting portions 14a, 14b. It should be noted that, in the example of fig. 4, portions of the discharging circuit 15 and the charging circuit 16 are configured to comprise common wiring, but the discharging circuit 15 and the charging circuit 16 may consist entirely of different wiring.

The heating connecting portion 12a, 12b are connected to a heater electrically conductive member, which is not shown, and the discharging circuit 15 is connected to the heating portion 121 via the heater electrically conductive member. Electrically conductive members 20a, 20b are connected to the power source connecting portions 14a, 14b and the discharging circuit 15 and the charging circuit 16 are connected to the power source portion 111 via the electrically conductive members 20a, 20b. More specifically, a positive electrode 111a of the power source portion 111 is connected to the positive electrode side power source connecting portion 14a via a positive electrode side electrically conductive member 20a, and a negative electrode 111b of the power source portion 111 is connected to the negative electrode side power source connecting portion 14b via a negative electrode side electrically conductive member 20b.

The discharging circuit 15 and the charging circuit 16 are connected to the control portion 116. During heating, the control portion 116 performs control to supply power from the power source portion 111 to the heating portion 121 via the electrically conductive members 20a, 20b, the power source connecting portions 14a, 14b, the discharging circuit 15, the heating connecting portions 12a, 12b, and the heater electrically conductive member. Further, during charging, the control portion 116 performs control to supply power from the USB port 13 to the power source portion 111 via the charging circuit 16, the power source connecting portions 14a, 14b, and the electrically conductive members 20a, 20b.

The electrically conductive members 20a, 20b are made of a thin plate-shaped electrically conductive metal material, and the electrically conductive metal material is exposed. The electrically conductive members 20a, 20b are typically a metal foil such as aluminum foil (foil made of aluminum or aluminum alloy) or copper foil. Also, the electrically conductive members 20a, 20b may be metal plates, for example metal plates containing nickel or copper alloys. In the positive electrode side electrically conductive member 20a, a power source side positive electrode contact 21a located at one end is fixed to the positive electrode 111a of the power source portion 111 and a substrate side positive electrode contact 22a located at the other end is fixed to the positive electrode side power source connecting portion 14a. In the negative electrode side electrically conductive member 20b, a negative source side positive electrode contact 21b located at one end is fixed to the negative electrode 111b of the power source portion 111 and a substrate side negative electrode contact 22b located at the other end is fixed to the negative electrode side power source connecting portion 14b. A fixing method such as soldering or welding may be adopted to fix the power source-side contacts 21a, 21b of the electrically conductive member 20a, 20b to the electrodes 111a, 111b of the power source portion 111, and to fix the substrate-side contacts 22a, 22b of the electrically conductive members 20a, 20b to the power source connecting portions 14a, 14b of the substrate 10.

When an impact is applied to the case 30, such as due to the aerosol generation device 100 being dropped, the electrically conductive members 20a, 20b shake about the fixed points, which are the power source-side contacts 21a, 21b and the substrate-side contacts 22a, 22b at both ends thereof. At this time, if the electrically conductive members 20a, 20b made of metal foil or the like shake greatly, the contacts 21a to 22b at both ends may come loose, or the electrically conductive members 20a, 20b may be damaged around the contacts 21a to 22b, and the electrical connection may be lost. Also, depending on the strength of the impact on the case 30, the power source portion 111, which is heavier than the other members in the aerosol generation device, may become detached from the retaining structure of the chassis 50, leading to breakage of the electrically conductive members 20a, 20b and the contacts 21a-22b.

Accordingly, the electrically conductive members 20a, 20b of the present disclosure have fixing portions 26a, 26b, respectively, which are fixed to the substrate 10. More specifically, the positive electrode side electrically conductive member 20a has a positive electrode side fixing portion 26a which is fixed to the substrate 10 and the negative electrode side electrically conductive member 20b has a negative electrode fixing portion 26b which is fixed to the substrate 10. The fixing portions 26a, 26b are fixed to the substrate 10 at locations different from the substrate-side contacts 22a, 22b.

In the electrically conductive members 20a, 20b of the present disclosure, the fixing portions 26a, 26b are provided at the distal ends of branched portions 24 that branch from main electrically conductive paths 23 connecting the power source-side contacts 21a, 21b and the substrate-side contacts 22a, 22b. Preferably, the branched portions 24 are provided approximately midway along the electrically conductive members 20a, 20b in the longitudinal direction. The fixing portion 26a of the positive electrode side electrically conductive member 20a is fixed to a positive electrode side power source fixing portion 17a of the substrate 10 by soldering, welding, etc., and the fixing portion 26b of the negative electrode side electrically conductive member 20b is fixed to a negative electrode side power source fixing portion 17b of the substrate 10 by soldering, welding, etc. The fixing of the fixing portions 26a, 26b to the substrate 10 is not limited to soldering or welding, and any fixing method, such as fixing with an adhesive, fixing with a seal or tape, etc., or screwing, for example, may be employed.

In this way, since the electrically conductive members 20a, 20b are fixed to the substrate 10 by the fixing portions 26a, 26b, even if an impact, etc. is applied to the aerosol generation device 100, it is possible to inhibit peeling of the contact points 21a-22b and damage to the electrically conductive members 20a, 20b. It should be noted that the fixing portions 26a, 26b need not be provided in the branched portions 24 that branch from the main electrically conductive path 23, but may be provided in the main electrically conductive path 23 itself, and the main electrically conductive path 23 itself may be fixed. Also, one electrically conductive member 20a, 20b may be provided with a plurality of fixing portions 26a, 26b.

Also, the positive electrode side power source fixing portion 17a and the negative electrode side power source fixing portion 17b of the substrate 10 to which the fixing portions 26a, 26b of the electrically conductive members 20a, 20b are fixed may be arranged to be electrically connected to an electric circuit provided on the substrate 10, or may be arranged such that one is electrically connected and the other is not electrically connected. Arranging not to be electrically connected means, for example, that the power source fixing portions 17a, 17b are surrounded by an insulating resist and that power cannot be exchanged with the discharging circuit 15 and the charging circuit 16. In other words, the fixing portions 26a, 26b of the electrically conductive members 20a, 20b may be electrically connected to a circuit formed on the substrate 10 or may be isolated from the circuit formed on the substrate 10.

In the first example shown in fig. 3 and fig. 4, the positive electrode side power source connecting portion 14a and the negative electrode side power source connecting portion 14b are arranged to be electrically connected to the discharging circuit 15 and the charging circuit 16 provided on the substrate 10. In contrast, the positive electrode side power source fixing portion 17a and the negative electrode side power source fixing portion 17b are arranged so as not to be electrically connected to the discharging circuit 15 or the charging circuit 16 provided on the substrate 10. That is, the fixing portions 26a, 26b of the electrically conductive members 20a, 20b are isolated from the circuits provided on the substrate 10.

As a result, during heating, power from the power source portion 111 is supplied to the heating portion 121 via the electrically conductive members 20a, 20b, the power source connecting portions 14a, 14b, the discharging circuit 15, the heating connecting portions 12a, 12b and the heater electrically conductive member. Also, during charging, power from the USB port 13 is supplied to the power source portion 111 via the charging circuit 16, the power source connecting portions 14a, 14b, and the electrically conductive members 20a, 20b. Therefore, the occurrence of electrical faults in the substrate 10 due to the fixing portions 26a, 26b can be inhibited.

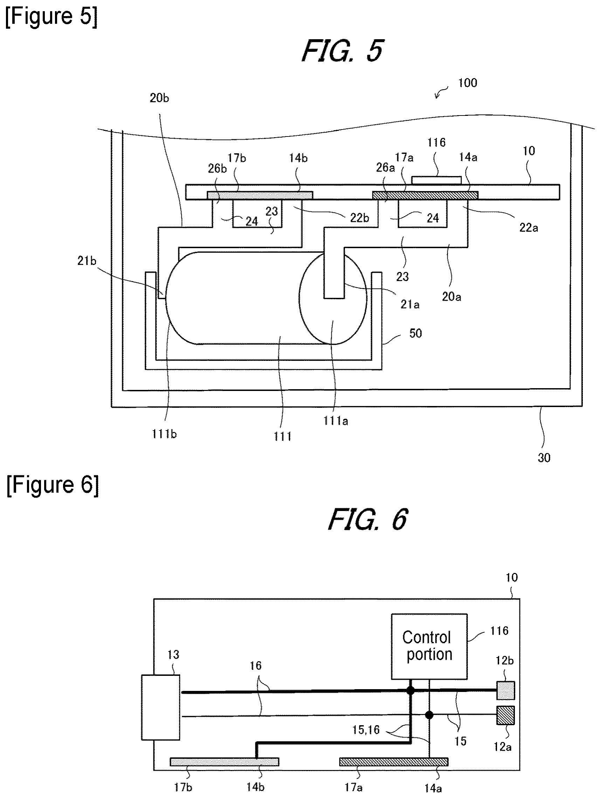

In a second example shown in fig. 5 and fig. 6, the positive electrode side power source connecting portion 14a and the negative electrode side power source connecting portion 14b are arranged to be electrically connected to the discharging circuit 15 and the charging circuit 16 provided on the substrate 10. In addition, the positive electrode side power source fixing portion 17a and the negative electrode side power source fixing portion 17b are also arranged to be electrically connected to the discharging circuit 15 and the charging circuit 16 provided on the substrate 10. Specifically, on the substrate 10, the positive electrode side power source connecting portion 14a and the positive electrode side power source fixing portion 17a are formed integrally, and the negative electrode side power source connecting portion 14b and the negative electrode side power source fixing portion 17b are formed integrally. That is, the fixing portions 26a, 26b of the electrically conductive members 20a, 20b are electrically connected to the discharging circuit 15 and the charging circuit 16 provided on the substrate 10.

As a result, during heating, power from the power source portion 111 is supplied to the heating portion 121 via the electrically conductive members 20a, 20b, the power source connecting portions 14a, 14b and the power source fixing portions 17a, 17b, the discharging circuit 15, the heating connecting portions 12a, 12b and the heater electrically conductive member. Also, during charging, power from the USB port 13 is supplied to the power source portion 111 via the charging circuit 16, the power source connecting portions 14a, 14b and the power source fixing portions 17a, 17b, and the electrically conductive members 20a, 20b. Therefore, the fixing portions 26a, 26b can be utilized as other contacts, different from the power source connecting portion portions 14a, 14b.

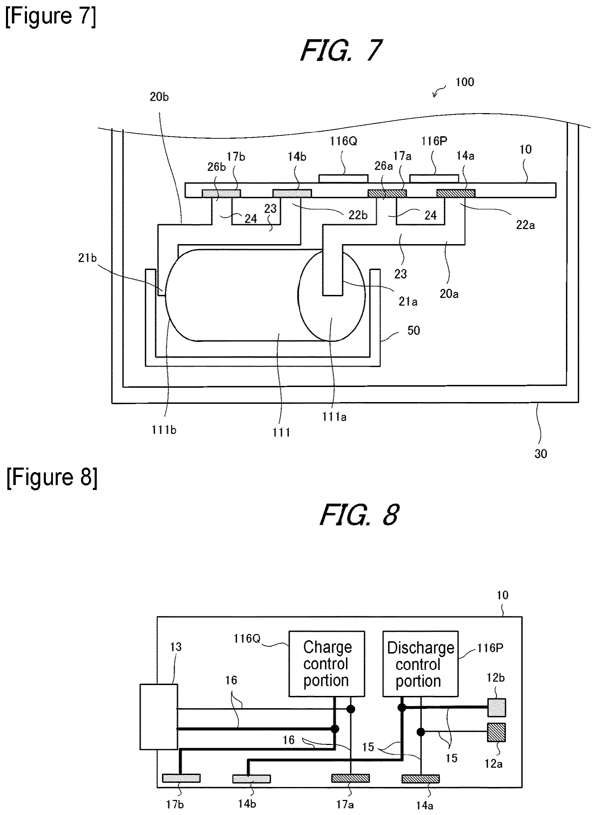

In a third example shown in fig. 7 and fig. 8, a discharge control portion 116P for controlling discharging and a charge control portion 116Q for controlling charging are provided separately on the substrate 10. The positive electrode side power source connecting portion 14a and the negative electrode side power source connecting portion 14b are arranged to be electrically connected to the discharging circuit 15 provided on the substrate 10. Also, the positive electrode side power source fixing portion 17a and the negative electrode side power source fixing portion 17b are arranged to be electrically connected to the charging circuit 16 provided in the substrate 10. That is, the substrate-side contacts 22a, 22b of the electrically conductive member 20a, 20b are electrically connected to the discharging circuit 15 provided on the substrate 10, and the fixing portions 26a, 26b of the electrically conductive members 20a, 20b are electrically connected to the charging circuit 16 provided on the substrate 10.

As a result, during heating, power from the power source portion 111 is supplied to the heating portion 121 via the electrically conductive members 20a, 20b, the power source connecting portions 14a, 14b, the discharging circuit 15, the heating connecting portions 12a, 12b and the heater electrically conductive member. Also, during charging, power from the USB port 13 is supplied to the power source portion 111 via the charging circuit 16, the power source fixing portions 17a, 17b, and the electrically conductive members 20a, 20b.

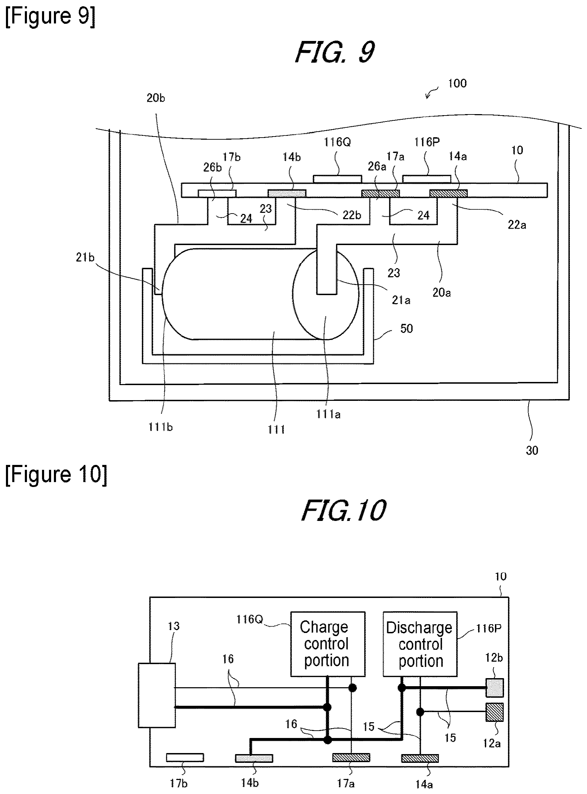

In a fourth example shown in fig. 9 and fig. 10, the discharge control portion 116P for controlling discharging and the charge control portion 116Q for controlling charging are provided separately on the substrate 10. The positive electrode side power source connecting portion 14a and the negative electrode side power source connecting portion 14b are arranged to be electrically connected to the discharging circuit 15 provided on the substrate 10. Also, of the positive electrode side power source fixing portion 17a and the negative electrode side power source fixing portion 17b, only the positive electrode side power source fixing portion 17a is arranged to be electrically connected to the charging circuit 16 provided on the substrate 10, and the negative electrode side power source fixing portion 17b is arranged so as not to be electrically connected to the discharging circuit 15 or the charging circuit 16 provided on the substrate 10. That is, the fixing portion 26a of the positive electrode side electrically conductive member 20a is electrically connected to the circuit provided on the substrate 10, and the fixing portion 26b of the negative electrode side electrically conductive member 20b is insulated from the circuit provided on the substrate 10.

As a result, during heating, power from the power source portion 111 is supplied to the heating portion 121 via the electrically conductive members 20a, 20b, the power source connecting portions 14a, 14b, the discharging circuit 15, the heating connecting portions 12a, 12b and the heater electrically conductive member. Also, during charging, power from the USB port 13 is supplied to the power source portion 111 via the charging circuit 16, the positive electrode side power source fixing portion 17a and the negative electrode side power source connecting portion 14b, and the electrically conductive members 20a, 20b.

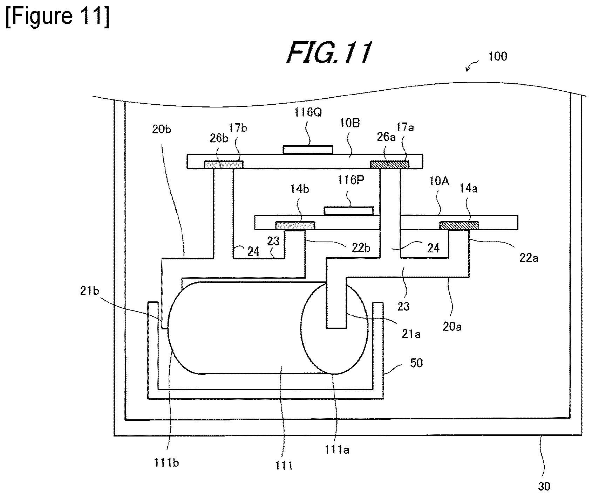

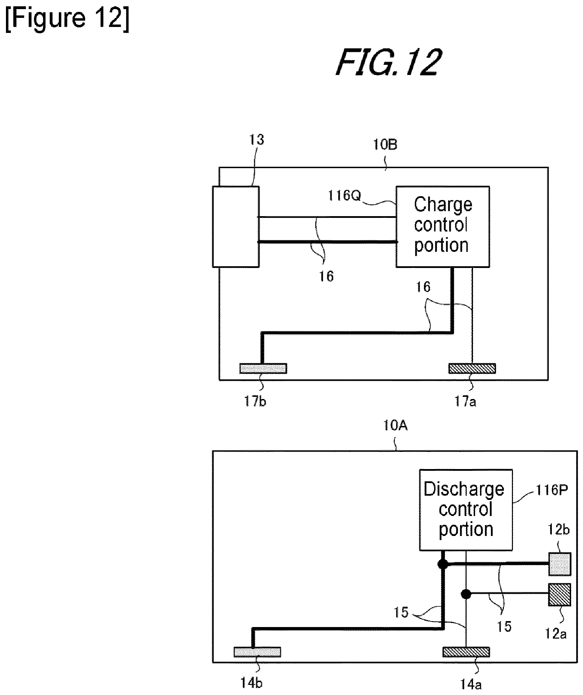

In a fifth example shown in fig. 11 and fig. 12, two substrates 10A, 10B are provided, the discharge control portion 116P for controlling discharging being provided on the substrate 10A, and the charge control portion 116Q for controlling charging being provided on the substrate 10B. The positive electrode side power source connecting portion 14a and the negative electrode side power source connecting portion 14b are provided on the substrate 10A and are arranged to be electrically connected to the discharging circuit 15 provided on the substrate 10A. Further, the positive electrode side power source fixing portion 17a and the negative electrode side power source fixing portion 17b are provided on the substrate 10B and are arranged to be electrically connected to the charging circuit 16 provided on the substrate 10B. That is, the substrate-side contacts 22a, 22b of the electrically conductive members 20a, 20b are electrically connected to the discharging circuit 15 provided on the substrate 10A, and the fixing portions 26a, 26b of the electrically conductive member 20a, 20b are electrically connected to the charging circuit 16 provided on the substrate 10B.

As a result, during heating, power from the power source portion 111 is supplied to the heating portion 121 via the electrically conductive members 20a, 20b, the power source connecting portions 14a, 14b, the discharging circuit 15, the heating connecting portions 12a, 12b and the heater electrically conductive member. Also, during charging, power from the USB port 13 is supplied to the power source portion 111 via the charging circuit 16, the power source fixing portions 17a, 17b, and the electrically conductive members 20a, 20b.

Also, in the previous examples, cases have been described in which the fixing portions 26a, 26b of the electrically conductive members 20a, 20b are fixed to the substrate 10 (10A, 10B), but the configuration is not limited to this, and the fixing portions 26a, 26b may be fixed to a member other than the substrate 10 (10A, 10B), such as the chassis 50 or the case 30.

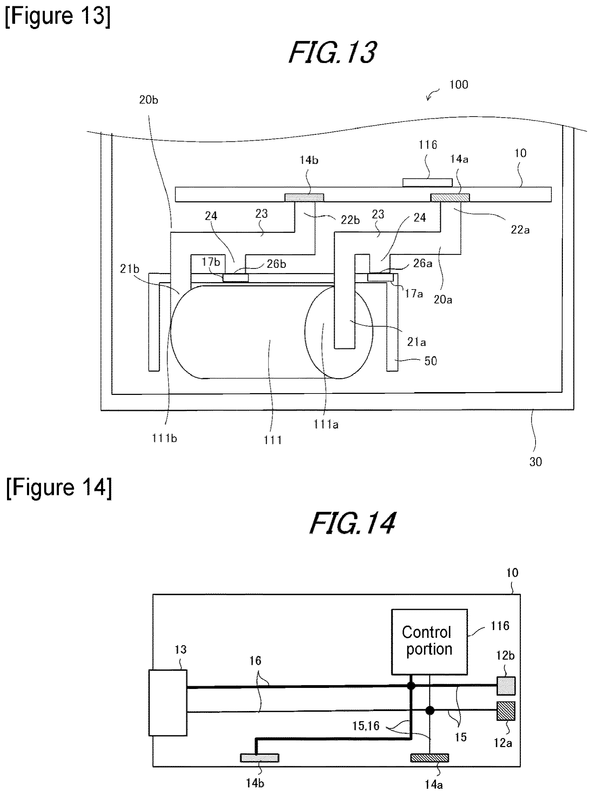

In a sixth example shown in fig. 13 and fig. 14, the fixing portions 26a, 26b of the electrically conductive members 20a, 20b are fixed to the chassis 50 holding the power source portion 111. By making the chassis 50 from an insulating resin, the fixing portions 26a, 26b are insulated.

It should be noted that the positive electrode side power source connecting portion 14a and the negative electrode side power source connecting portion 14b are arranged to be electrically connected to the discharging circuit 15 and the charging circuit 16 provided on the substrate 10. As a result, during heating, power from the power source portion 111 is supplied to the heating portion 121 via the electrically conductive members 20a, 20b, the power source connecting portions 14a, 14b, the discharging circuit 15, the heating connecting portions 12a, 12b and the heater electrically conductive member. Also, during charging, power from the USB port 13 is supplied to the power source portion 111 via the charging circuit 16, the power source connecting portions 14a, 14b, and the electrically conductive members 20a, 20b.

Although various embodiments of the present disclosure have been described above with reference to the drawings, it goes without saying that the present disclosure is not limited to such examples. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

The present specification sets forth at least the following features. Note that corresponding components, etc. in the embodiments described above are shown in parentheses, but are not limited thereto.
(1) A power source unit (power source unit 110, aerosol generation device 100B, 100) for an aerosol generation device (aerosol generation device 100A, 100B, 100), the power source unit comprising a power source (power source portion 111A, 111B, 111) for supplying power to a heating portion (heating portion 121A, 121B, 121) that heats an aerosol source,
   a control portion (control portion 116A, 116B, 116, 116P) for controlling the supply of power from the power source to the heating portion,
   a substrate (substrate 10A, 10) on which the control portion is provided,
   an electrically conductive member (positive electrode side electrically conductive member 20a, negative electrode side electrically conductive member 20b) for connecting the power source and the substrate, and
   a case (case 30) for accommodating the power source, the control portion, the substrate and the electrically conductive member, wherein
   the electrically conductive member comprises:
      a power source-side contact (power source side positive electrode contact 21a, negative source side positive electrode contact 21b) that contacts the power source;
      a substrate-side contact (substrate side positive electrode contact 22a, substrate side negative electrode contact 22b) that contacts the substrate; and
      a fixing portion (positive electrode side fixing portion 26a, negative electrode side fixing portion 26b) that is provided between the power source-side contact and the substrate-side contact and that is fixed to the substrate, the case, or another member that is accommodated in the case and is different from the substrate and the case.

According to (1), since the electrically conductive member is fixed by the fixing portion to the substrate, the case or another member different from the substrate and the case, even if an impact or the like is applied to the aerosol generation device, it is possible to inhibit peeling apart of the contacts and damage to the electrically conductive member.

(2) The power source unit for an aerosol generation device as disclosed in (1), wherein the fixing portion is provided in a branched portion (branched portion 24) that branches from a main electrically conductive path (main electrically conductive path 23) connecting the power source-side contact and the substrate-side contact.

According to (2), by providing the fixing portion in the branched portion, the effect on the main electrically conductive path can be reduced or eliminated.

(3) The power source unit for an aerosol generation device as disclosed in (1) or (2), wherein
the fixing portion is fixed to the substrate and is insulated from a circuit (discharging circuit 15, charging circuit 16) formed on the substrate.

According to (3), the fixing portion can inhibit the generation of electrical faults in the substrate.

(4) The power source unit for an aerosol generation device as disclosed in (1) or (2), wherein
the fixing portion is fixed to the substrate and is electrically connected to a circuit (discharging circuit 15, charging circuit 16) formed on the substrate.

According to (4), the fixing portion can be utilized as another contact.

(5) The power source unit for an aerosol generation device as disclosed in (4), wherein the substrate-side contact is connected to a discharging circuit (discharging circuit 15) that leads to the heating portion, and
the fixing portion is connected to a charging circuit (charging circuit 16) that leads to a charging port (USB port 13).

According to (5), by utilizing the substrate-side contact for the discharging circuit and utilizing the fixing portion as another substrate-side contact that leads to the charging circuit, the substrate design flexibility is improved.

(6) The power source unit for an aerosol generation device as disclosed in (1) or (2), wherein
the other member is another substrate (substrate 10B) different from the substrate, and
the fixing portion is fixed to the other substrate.

According to (6), since the fixing portion is fixed to the other substrate, the one substrate can be made smaller.

(7) The power source unit for an aerosol generation device as disclosed in (6), wherein the substrate-side contact is formed on the substrate and is connected to a discharging circuit (discharging circuit 15) that leads to the heating portion, and
the fixing portion is connected to a charging circuit (charging circuit 16) that is formed on the other substrate and that leads to a charging port (USB port 13).

According to (7), the substrates can be separated between the discharge circuit and the charge circuit.

(8) The power source unit for an aerosol generation device as disclosed in (1) or (2), wherein
the other member is a chassis (chassis 50) that holds the power source, and
the fixing portion is fixed to the chassis.

According to (8), by utilizing the chassis that holds the power source, is insulating, and has a relatively large volume, as the other member, the fixing portion can be easily fixed. Also, since there is no need to provide a space on the substrate to fix the fixing portion, the substrate design flexibility is improved.

(9) The power source unit for an aerosol generation device as disclosed in (1) or (2), wherein
the fixing portion includes a positive electrode side fixing portion (fixing portion 26a) and a negative electrode side fixing portion (fixing portion 26b),
the positive electrode side fixing portion and the negative electrode side fixing portion are both fixed to the substrate, and
at least one of the positive electrode side fixing portion and the negative electrode side fixing portion is electrically connected to a circuit (discharging circuit 15, charging circuit 16) formed on the substrate.

According to (9), the fixing portion of at least one of the positive electrode side fixing portion and the negative electrode side fixing portion can be utilized as the other substrate-side contact. The negative electrode fixing portion may be electrically connected to a ground electrode and the positive electrode fixing portion may be electrically connected to the discharging circuit and/or the charging circuit.

(10) The power source unit for an aerosol generation device as disclosed in any of (1)-(9), wherein
the electrically conductive member consists of a plate-shaped electrically conductive metal material, and the electrically conductive metal material is exposed.

According to (10), although the electrically conductive member, which is an exposed plate-shaped electrically conductive metal material, is susceptible to breakage upon impact, by providing the fixing portion, damage to the electrically conductive member can be inhibited.

(11) The power source unit for an aerosol generation device as disclosed in any of (1)-(10), wherein
the electrically conductive member is a metal foil.

According to (11), by fixing the metal foil, which is particularly prone to breakage, using the fixing portion, it is possible to inhibit peeling of the contact and damage to the electrically conductive member.

(12) The power source unit as disclosed in any of (1) - (10), wherein
the electrically conductive member is a metal plate.

According to (12), by fixing the metal plate using the fixing portion, it is possible to inhibit peeling of the contact.

(13) The power source unit for an aerosol generation device as disclosed in any of (1)-(12), wherein
the fixing portion is provided approximately midway between the power source-side contact and the substrate-side contact.

According to (13), by fixing the middle of the electrically conductive member, which has a large displacement when an impact or the like is applied to the aerosol generation device, breakage of the electrically conductive member can be effectively inhibited.

(14) An aerosol generation device comprising the power source unit for an aerosol generation device as disclosed in any of (1)-(13), and
the heating portion.

According to (14), since the electrically conductive member is fixed by the fixing portion to the substrate, the case or another member different from the substrate and the case, even if an impact or the like is applied to the aerosol generation device, it is possible to inhibit damage to the electrically conductive member.

### REFERENCE SIGNS LIST

10, 10A, 10B substrate
20a positive electrode side electrically conductive member (electrically conductive member)
20b negative electrode side electrically conductive member (electrically conductive member)
13 USB port (charging port)
15 discharging circuit (circuit)
16 charging circuit (circuit)
21a power source side positive electrode contact (power source-side contact)
21b negative source side positive electrode contact (power source-side contact)
22a substrate side positive electrode contact (substrate-side contact)
22b substrate side negative electrode contact (substrate-side contact)
23 main electrically conductive path
24 branched portion
26a positive electrode side fixing portion (fixing portion)
26b negative electrode side fixing portion (fixing portion)
30 case
50 chassis
100 aerosol generation device (power source unit)
100A aerosol generation device
100B aerosol generation device (power source unit)
110 power source unit
111, 111A, 111B power source unit
116, 116A, 116B control portion
116P discharge control portion (control device)
121, 121A, 121B heating portion

## Claims

1. A power source unit for an aerosol generation device, the power source unit comprising a power source for supplying power to a heating portion that heats an aerosol source,
a control portion for controlling the supply of power from the power source to the heating portion,
a substrate on which the control portion is provided,
an electrically conductive member for connecting the power source and the substrate, and
a case for accommodating the power source, the control portion, the substrate and the electrically conductive member, wherein
the electrically conductive member comprises:
a power source-side contact that contacts the power source;
a substrate-side contact that contacts the substrate; and
a fixing portion that is provided between the power source-side contact and the substrate-side contact and that is fixed to the substrate, the case, or another member that is accommodated in the case and is different from the substrate and the case.

2. The power source unit for an aerosol generation device as claimed in claim 1, wherein
the fixing portion is provided in a branched portion that branches from a main electrically conductive path connecting the power source-side contact and the substrate-side contact.

3. The power source unit for an aerosol generation device as claimed in claim 1 or 2, wherein
the fixing portion is fixed to the substrate and is insulated from a circuit formed on the substrate.

4. The power source unit for an aerosol generation device as claimed in claim 1 or 2, wherein the fixing portion is fixed to the substrate and is electrically connected to a circuit formed on the substrate.

5. The power source unit for an aerosol generation device as claimed in claim 4, wherein
the substrate-side contact is connected to a discharging circuit that leads to the heating portion, and
the fixing portion is connected to a charging circuit that leads to a charging port.

6. The power source unit for an aerosol generation device as claimed in claim 1 or 2, wherein
the other member is another substrate different from the substrate, and
the fixing portion is fixed to the other substrate.

7. The power source unit for an aerosol generation device as claimed in claim 6, wherein
the substrate-side contact is formed on the substrate and is connected to a discharging circuit that leads to the heating portion, and
the fixing portion is connected to a charging circuit that is formed on the other substrate and that leads to a charging port.

8. The power source unit for an aerosol generation device as claimed in claim 1 or 2, wherein
the other member is a chassis that holds the power source, and
the fixing portion is fixed to the chassis.

9. The power source unit for an aerosol generation device as claimed in claim 1 or 2, wherein
the fixing portion includes a positive electrode side fixing portion and a negative electrode side fixing portion,
the positive electrode side fixing portion and the negative electrode side fixing portion are both fixed to the substrate, and
at least one of the positive electrode side fixing portion and the negative electrode side fixing portion is electrically connected to a circuit formed on the substrate.

10. The power source unit for an aerosol generation device as claimed in any one of claims 1 to 9, wherein
the electrically conductive member consists of a plate-shaped electrically conductive metal material, and the electrically conductive metal material is exposed.

11. The power source unit for an aerosol generation device as claimed in any one of claims 1 to 10, wherein
the electrically conductive member is a metal foil.

12. The power source unit as claimed in any one of claims 1 to 10, wherein
the electrically conductive member is a metal plate.

13. The power source unit for an aerosol generation device as claimed in any one of claims 1 to 12, wherein
the fixing portion is provided approximately midway between the power source-side contact and the substrate-side contact.

14. An aerosol generation device comprising the power source unit for an aerosol generation device as claimed in any one of claims 1 to 13, and
the heating portion.
